# FASCICULE DE BREVET EUROPEEN

(11) **EP 4 059 760 B1**
(45) Date de publication et mention de la délivrance du brevet: **25.06.2025**
(21) Numéro de dépôt: 22160689.0
(22) Date de dépôt: 08.03.2022
(51) Int. Cl.: B60L 3/00, B60L 1/00, B64D 27/34, B64D 27/355, B60L 1/02, B60L 50/70, B60L 58/34, B64D 27/24, B64D 41/00, F01C 7/00, H01M 8/04082, H01M 8/0432, H01M 8/0438, H01M 8/0444, H01M 8/04746, H01M 8/249, B64D 37/32, B64D 37/30

(54) **SYSTÈME DE STOCKAGE D'HYDROGÈNE ET AÉRONEF COMPRENANT UN SYSTÈME DE STOCKAGE D'HYDROGÈNE**
WASSERSTOFFSPEICHERSYSTEM UND LUFTFAHRZEUG MIT EINEM WASSERSTOFFSPEICHERSYSTEM
SYSTEM FOR STORING HYDROGEN AND AIRCRAFT COMPRISING A SYSTEM FOR STORING HYDROGEN

(30) Priorité: 17.03.2021 FR 2102637
(43) Date de publication de la demande: 21.09.2022
(73) Titulaire: AIRBUS OPERATIONS (S.A.S.), 31060 Toulouse (FR); Airbus (S.A.S.), 31700 Blagnac (FR)
(72) Inventeur: LANDOLT, Jonathan, 31700 Blagnac (FR); RASPATI, Olivier, 31060 Toulouse (FR)
(74) Mandataire: Jardel, Marc Henry Philippe

(56) Documents cités:
- EP-A1- 3 182 490
- EP-A1- 3 228 546
- WO-A1-2015/104487
- WO-A1-2017/089679
- DE-A1- 102014 205 394
- FR-A1- 3 097 202
- US-A1- 2016 159 492
- US-A1- 2020 185 744
- US-B2- 10 654 592

## Description

L'invention est relative au domaine du stockage de l'hydrogène et plus particulièrement à son application aux aéronefs utilisant un système de propulsion électrique alimenté en énergie par de l'hydrogène. Un tel système nécessite l'installation, à bord de l'aéronef, d'un réservoir d'hydrogène liquide permettant d'alimenter en hydrogène des piles à combustible ou un moteur de propulsion à combustion d'hydrogène. Pour rester à l'état liquide dans le réservoir, l'hydrogène doit être maintenu à très basse température, de l'ordre de -253 °C. Pour cela, le réservoir d'hydrogène est doté d'une isolation thermique très performante. Toutefois, malgré cette isolation thermique, une partie de l'hydrogène est amenée à s'évaporer dans le réservoir. Lorsque de l'hydrogène issu du réservoir est utilisé pour assurer le fonctionnement de l'aéronef, en particulier sa propulsion, ce phénomène d'évaporation n'est pas gênant puisque l'hydrogène ainsi évaporé est utilisé à bord de l'aéronef, par exemple pour alimenter des piles à combustible ou un moteur à combustion d'hydrogène. Par contre, lorsque l'aéronef est stationné au sol, les piles à combustible ou le moteur à combustion d'hydrogène ne sont plus utilisés pour le fonctionnement de l'aéronef et ils ne consomment donc plus d'hydrogène. Il en résulte que la pression dans le réservoir augmente du fait du phénomène précité d'évaporation de l'hydrogène. Or, afin de garantir l'intégrité du réservoir et éviter son explosion, il est nécessaire de limiter la pression à l'intérieur du réservoir à une valeur de pression inférieure à une valeur maximale de pression, par exemple d'environ 850 bars.

Une solution à ce problème, imaginée par les inventeurs, consisterait à installer un système de surveillance de la pression dans le réservoir, qui commanderait l'ouverture d'une vanne lorsque la pression dans le réservoir est trop élevée, de façon à rejeter dans l'atmosphère une partie de l'hydrogène gazeux contenu dans le réservoir, de façon à permettre une diminution de la pression dans le réservoir. Toutefois, pour fonctionner, ce système de surveillance doit être alimenté en énergie, par exemple en électricité, alors que l'aéronef ne peut plus être alimenté électriquement par les piles à combustible utilisées pour la propulsion de l'aéronef puisque ces piles à combustible sont à l'arrêt lorsque l'aéronef est stationné au sol. Une première solution pourrait consister à alimenter ce système de surveillance au moyen d'une batterie. Toutefois, cette solution serait difficile à mettre en oeuvre en toute sécurité, car il faudrait pouvoir garantir que la capacité de la batterie permettrait d'alimenter le système de surveillance aussi longtemps que le réservoir d'hydrogène ne serait pas vide. Une deuxième solution pourrait consister à alimenter le système de surveillance au moyen d'une source électrique située au sol, par exemple un « groupe de parc » de l'aéroport sur lequel est stationné l'aéronef. Toutefois, cette solution rendrait l'aéronef dépendant des moyens disponibles au sol, ce qui pourrait amener à des situations difficiles à gérer si un aéroport ne dispose pas d'une source électrique appropriée.

Le document US2016/159492A1 décrit un système comprenant une pile à combustible alimentée en hydrogène depuis un réservoir d'hydrogène. Un régulateur hybride est monté en série sur une canalisation d'hydrogène entre le réservoir d'hydrogène et la pile à combustible. Ce régulateur hybride, dont l'entrée est reliée au réservoir d'hydrogène, permet de réguler la pression de l'hydrogène à sa sortie, reliée à la pile à combustible. Le régulateur hybride comporte un actionneur linéaire permettant de régler la valeur de la pression de l'hydrogène à sa sortie. Le régulateur hybride régule la pression de l'hydrogène à sa sortie indépendamment de la pression de l'hydrogène à son entrée, correspondant à la pression de l'hydrogène dans le réservoir. Par conséquent, le régulateur hybride ne présente aucune utilité pour limiter la pression à l'intérieur du réservoir d'hydrogène.

Le document US 10 654 592 B2 décrit un système de stockage d'hydrogène selon l'art antérieur.

### EXPOSE DE L'INVENTION :

La présente invention a notamment pour but d'apporter une solution à ce problème. Elle concerne un ensemble comprenant un aéronef et un système de stockage d'hydrogène, conforme à la revendication 1.

Ainsi, étant donné que la pile à combustible est reliée de façon permanente au réservoir d'hydrogène, la pile à combustible est alimentée en permanence en hydrogène tant qu'il reste de l'hydrogène dans le réservoir. Par conséquent, tant qu'il reste de l'hydrogène dans le réservoir, la pile à combustible produit de l'électricité permettant d'alimenter électriquement l'unité de traitement. Cela permet d'alimenter le système de contrôle de l'évaporation d'hydrogène de façon autonome et donc de garantir son fonctionnement tant qu'il reste de l'hydrogène dans le réservoir. De plus, le fait de consommer de l'hydrogène issu du réservoir pour alimenter la pile à combustible permet d'augmenter la durée avant qu'une dépressurisation du réservoir, en commandant la vanne, soit nécessaire.

Les revendications 2 à 7 correspondent à différents modes de réalisation de l'invention.

### DESCRIPTION DETAILLEE :

L'invention sera mieux comprise à la lecture de la description qui suit et à l'examen des figures annexées.
La figure 1 illustre de façon schématique un système de stockage d'hydrogène.
La figure 2 illustre un aéronef équipé d'un système de stockage d'hydrogène.
La figure 3 illustre de façon schématique un système de stockage d'hydrogène, relié à un système de propulsion d'un aéronef.
La figure 4 illustre une variante du système de stockage d'hydrogène relié au système de propulsion d'un aéronef.
La figure 5 illustre de façon schématique un mode particulier de réalisation du système de stockage d'hydrogène relié au système de propulsion d'un aéronef.
La figure 6 illustre de façon schématique un autre mode particulier de réalisation du système de stockage d'hydrogène relié au système de propulsion d'un aéronef.
La figure 7 illustre de façon schématique un autre mode particulier de réalisation du système de stockage d'hydrogène relié au système de propulsion d'un aéronef.
La figure 8 illustre de façon schématique un mode particulier, conforme à l'invention, d'intégration d'un système de stockage d'hydrogène avec un aéronef.

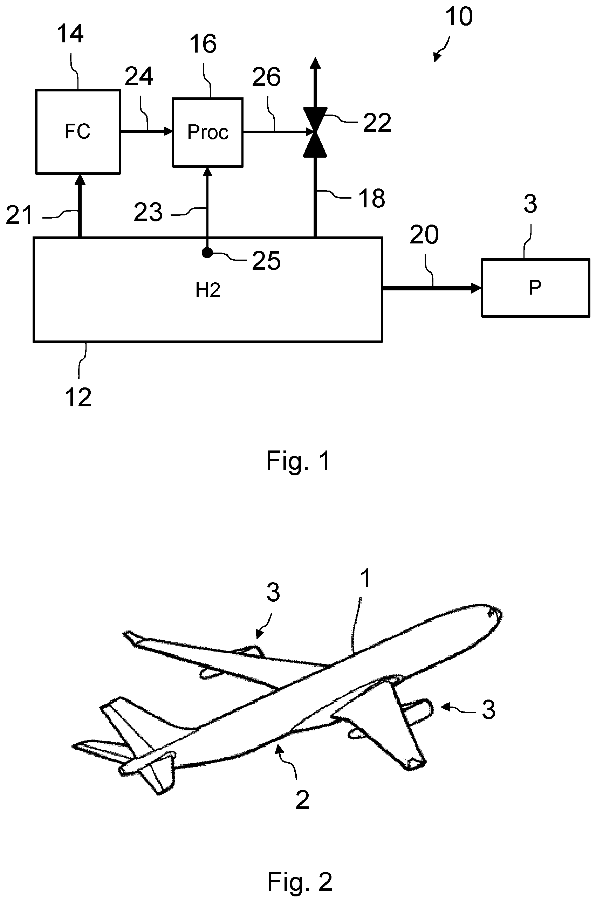

Le système de stockage d'hydrogène 10 représenté sur la figure 1 comprend un réservoir d'hydrogène 12 (libellé « H2 » sur la figure), une pile à combustible 14 (libellée « FC » sur la figure), une unité de traitement 16 (libellée « Proc » sur la figure), ainsi qu'une canalisation 18 sur laquelle est montée en série une vanne commandable 22. Une première extrémité de la canalisation 18 est reliée au réservoir d'hydrogène 12. Une deuxième extrémité de la canalisation 18 est prévue pour rejeter dans l'atmosphère de l'hydrogène issu du réservoir d'hydrogène 12 lorsque la vanne 22 est ouverte. La pile à combustible 14 est reliée de façon permanente au réservoir d'hydrogène 12 par une canalisation 21, de façon à permettre la production d'électricité par la pile à combustible 14 tant que le réservoir 12 contient de l'hydrogène. L'unité de traitement 16 est reliée à la pile à combustible 14 par un circuit électrique 24 prévu pour permettre l'alimentation électrique de l'unité de traitement 16 par la pile à combustible 14. L'unité de traitement 16 est également reliée en sortie à une entrée de commande de la vanne 22, par une liaison 26, de façon à permettre la commande, par l'unité de traitement 16, de l'ouverture ou de la fermeture de la vanne 22. De façon avantageuse, l'unité de traitement 16 est également reliée en entrée à un capteur de pression 25 par une liaison 23. Le capteur de pression 25 est installé de façon à permettre de mesurer la pression de l'hydrogène dans le réservoir d'hydrogène 12. Selon une première alternative, le capteur de pression 25 est installé dans le réservoir d'hydrogène 12. Selon une autre alternative, le capteur de pression 25 est installé dans une canalisation d'hydrogène reliée au réservoir d'hydrogène. L'unité de traitement 16 comprend par exemple un microprocesseur ou un microcontrôleur.

Dans un mode particulier de réalisation, le réservoir d'hydrogène 12 est installé à bord d'un aéronef tel que l'aéronef 1 représenté sur la figure 2. Le réservoir d'hydrogène 12 est alors relié, par exemple, à un système de propulsion 3 de l'aéronef par une canalisation 20, de telle façon que le système de propulsion 3 est alimenté en énergie par de l'hydrogène issu du réservoir 12.

Le fonctionnement du système de stockage d'hydrogène est tel qu'indiqué ci-après. Tant que le réservoir d'hydrogène 12 contient de l'hydrogène, la pile à combustible 14 reçoit de l'hydrogène provenant du réservoir par la canalisation 21, de telle façon que la pile à combustible produit de l'électricité en permanence. Par conséquent, l'unité de traitement 16, reliée électriquement à la pile à combustible 14 par le circuit électrique 24, est alimentée électriquement en permanence tant que le réservoir d'hydrogène 12 contient de l'hydrogène. Cela permet de garantir le fonctionnement de l'unité de traitement 16 tant que le réservoir d'hydrogène 12 contient de l'hydrogène. L'unité de traitement 16 commande l'ouverture ou la fermeture de la vanne 22 en fonction de la pression à l'intérieur du réservoir d'hydrogène 12. Dans un mode de réalisation, l'unité de traitement commande d'ouverture de la vanne 22 lorsque ladite pression est supérieure ou égale à un premier seuil de pression prédéterminé et elle commande la fermeture de la vanne lorsque la pression est inférieure ou égale à un deuxième seuil de pression prédéterminé, inférieur au premier seuil de pression. Ainsi, lorsque la pression à l'intérieur du réservoir atteint le premier seuil prédéterminé de pression du fait de l'évaporation d'hydrogène dans le réservoir, l'ouverture de la vanne 22 permet d'évacuer, par la canalisation 18, une partie de l'hydrogène contenu dans le réservoir sous forme gazeuse. Cette partie de l'hydrogène est ainsi rejetée dans l'atmosphère, ce qui permet de faire diminuer la pression dans le réservoir d'hydrogène. La pression dans le réservoir diminue ainsi jusqu'à atteindre, à la baisse, le deuxième seuil de pression prédéterminé. L'unité de traitement 16 commande alors la fermeture de la vanne 22 de façon à arrêter de rejeter de l'hydrogène dans l'atmosphère. Ce fonctionnement permet de garantir que la valeur de la pression à l'intérieur du réservoir d'hydrogène ne dépasse pas le premier seuil de pression prédéterminé. Pour cela, l'unité de traitement utilise par exemple comme valeur de pression, une valeur de pression acquise du capteur de pression 25. De préférence, l'unité de traitement surveille la pression de façon répétitive, par exemple selon une période d'environ 1 seconde. La valeur du premier seuil de pression est par exemple choisie dans l'intervalle [5bars ; 25bars], par exemple 10bars, et la valeur du deuxième seuil de pression est par exemple choisie dans l'intervalle [5bars ; 10bars], par exemple 5bars.

Dans un mode de réalisation, lorsque le système de stockage d'hydrogène 10 est relié au système de propulsion 3, le système de propulsion 3 comprend un moteur fonctionnant par combustion d'hydrogène issu du système de stockage d'hydrogène 10 via la canalisation 20.

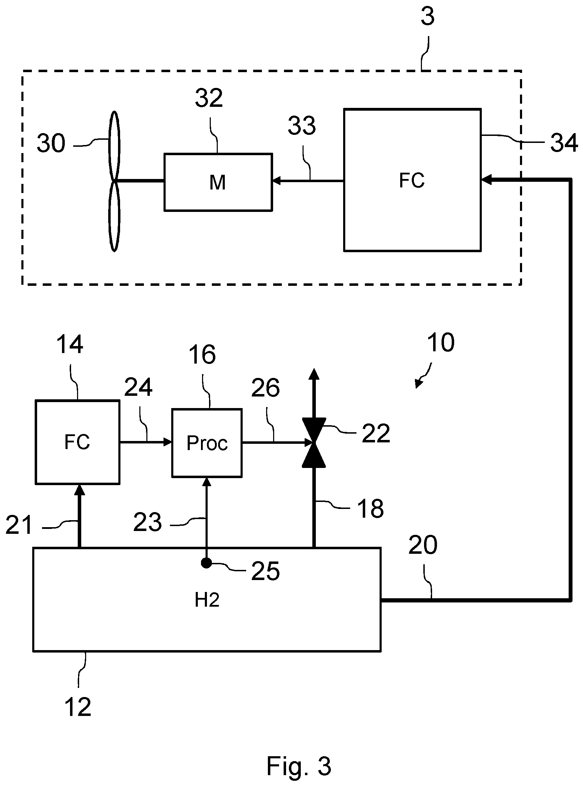

Dans un autre mode de réalisation illustré sur la figure 3, le système de propulsion 3 comprend un ensemble de piles à combustible 34, reliées électriquement, par un ensemble de liaisons électriques 33, à au moins un moteur électrique 32. Une hélice de propulsion 30 est couplée mécaniquement au moteur électrique 32. Les piles à combustible de l'ensemble de piles à combustible 34 sont reliées en entrée au système de stockage d'hydrogène 10 via la canalisation 20. Le système de propulsion 3 comprend en outre un contrôleur non représenté sur la figure 3. Pour permettre le fonctionnement du système de propulsion 3, le contrôleur commande l'alimentation en hydrogène des piles à combustible de l'ensemble de piles à combustible 34, par exemple en commandant l'ouverture d'une vanne montée en série sur la canalisation 20. Les piles à combustible produisent alors de l'électricité, permettant ainsi d'alimenter électriquement le moteur 32 qui entraîne alors en rotation l'hélice de propulsion 30.

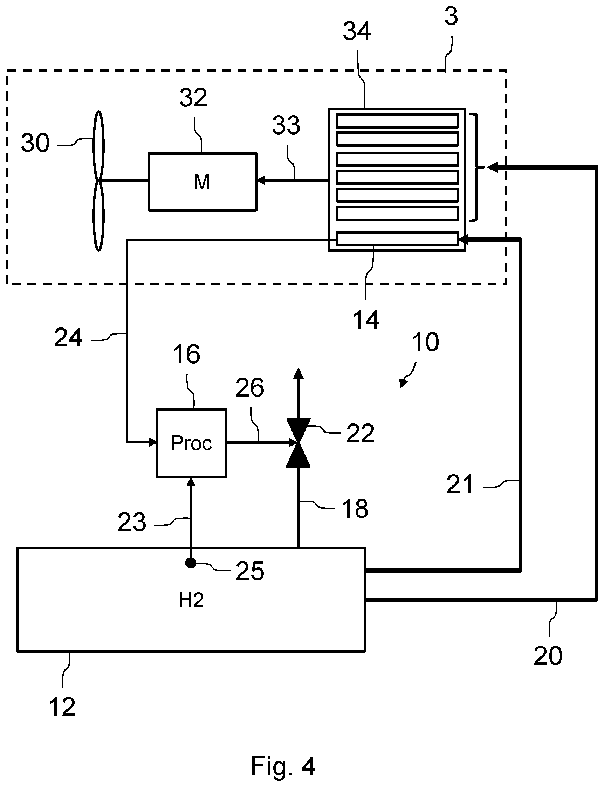

Dans une variante illustrée sur la figure 4, la pile à combustible 14 du système de stockage d'hydrogène fait partie de l'ensemble de piles à combustible 34 alimentant électriquement le moteur électrique 32. Comme dans le mode de réalisation illustré sur la figure 3, la pile à combustible 14 est reliée de façon permanente au réservoir d'hydrogène par la canalisation 21. Les autres piles à combustible de l'ensemble de piles à combustible 34 sont alimentées en hydrogène par la canalisation 20. Cette alimentation en hydrogène est contrôlée par le contrôleur du système de propulsion 3, comme indiqué précédemment. Un sortie électrique de la pile à combustible 14 alimente électriquement l'unité de traitement 16 via la liaison électrique 24.

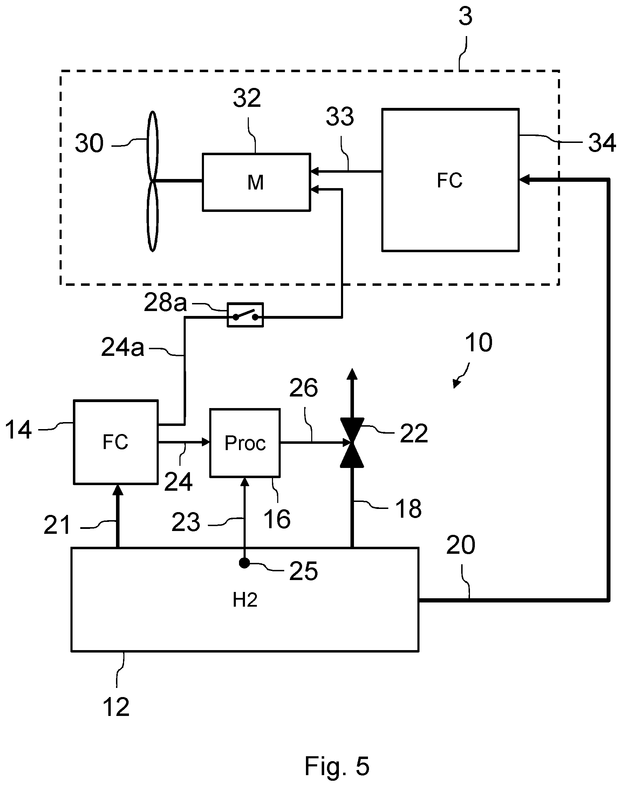

De façon particulière, l'aéronef comporte un circuit électrique configuré pour alimenter électriquement le moteur électrique 32 par la pile à combustible 14 du système 10 de stockage d'hydrogène, en complément de l'alimentation électrique dudit moteur par l'ensemble de piles à combustible 34. Dans un exemple illustré sur la figure 5, ce circuit électrique comprend une liaison électrique 24a, ainsi qu'un contacteur 28a monté en série sur cette liaison électrique. Une première extrémité de la liaison électrique 24a est reliée à une sortie électrique de la pile à combustible 14 et une deuxième extrémité de ladite liaison électrique est reliée au moteur électrique 32 ou à un contrôleur dudit moteur. Le contacteur 28a est commandé par le contrôleur du système de propulsion 3. Par exemple, le contrôleur commande la fermeture du contacteur 28a pendant des phases d'utilisation du système de propulsion 3 requérant une puissance de propulsion élevée, en particulier lors du décollage de l'aéronef. Cela permet d'éviter de surdimensionner l'ensemble de piles à combustible 34 pour permettre une fourniture ponctuelle de puissance maximale pendant le décollage de l'aéronef.

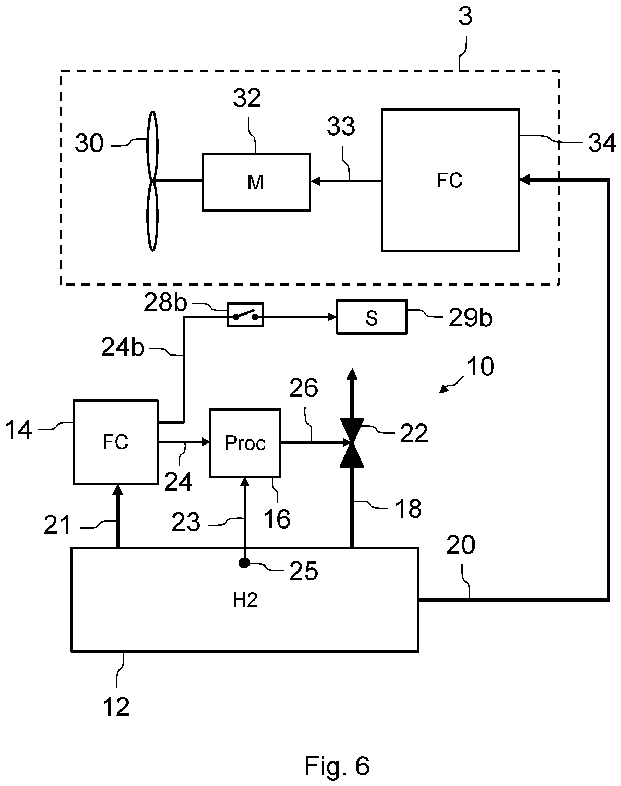

De façon particulière encore, comme représenté sur la figure 6, l'aéronef comporte en outre un système non propulsif 29b (libellé S sur la figure) normalement alimenté en électricité par une source électrique embarquée de l'aéronef (non représentée sur la figure), dite source électrique principale, indépendante de la pile à combustible 14 du système de stockage d'hydrogène et de l'ensemble de piles à combustible 34. L'aéronef comporte également un circuit électrique configuré pour alimenter électriquement le système non propulsif 29b par la pile à combustible 14 du système 10 de stockage d'hydrogène lors d'une défaillance de la source électrique principale, en particulier lorsque l'aéronef est en vol. Ce circuit électrique comprend une liaison électrique 24b entre une sortie électrique de la pile à combustible 14 et le système non propulsif 29b, ainsi qu'un contacteur 28b monté en série sur cette liaison électrique. Le contacteur 28b est commandé, par exemple par un cœur électrique (non représenté) de l'aéronef, de façon à fermer le contacteur lors d'une défaillance de la source électrique principale.

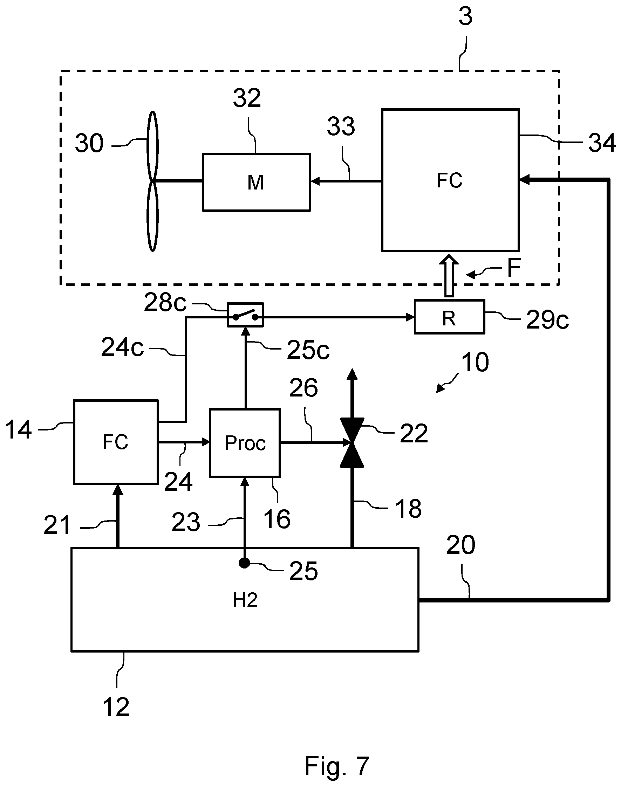

De façon particulière encore, comme illustré sur la figure 7, l'aéronef comporte en outre un système électrique 29c (libellé R sur la figure) distinct de l'unité de traitement16, ainsi qu'un circuit électrique configuré pour alimenter électriquement ce système électrique par la pile à combustible du système de stockage d'hydrogène lorsque l'aéronef est stationné au sol. Ce circuit électrique comprend une liaison électrique 24c entre une sortie électrique de la pile à combustible 14 et le système électrique 29c, ainsi qu'un contacteur 28c monté en série sur cette liaison électrique. Le système électrique 29c est par exemple un système de réchauffage de l'ensemble de piles à combustible 34 du système de propulsion 3, comme illustré par la flèche F sur la figure. Le contacteur 28c est par exemple commandé par l'unité de traitement 16, via une liaison 25c, de façon à commander la fermeture dudit contacteur lorsque les piles à combustible de l'ensemble de piles à combustible 34 doivent être réchauffées pendant que l'aéronef est stationné au sol.

Dans une variante, le système électrique 29c est un système électrique externe à l'aéronef. La liaison électrique 28c comprend alors une prise électrique installée à bord de l'aéronef (par exemple fixée à une paroi du fuselage 2 de l'aéronef), ainsi qu'un câble électrique amovible branché entre cette prise électrique et le système électrique 29c lorsque l'aéronef est stationné au sol.

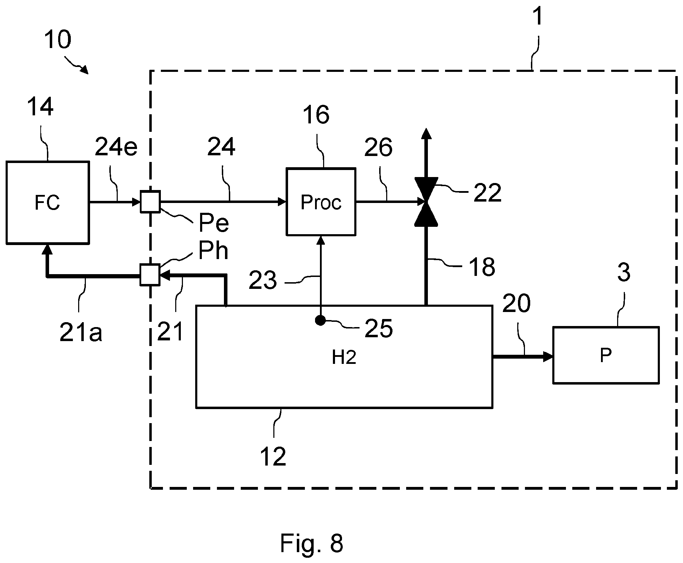

Dans la réalisation illustré sur la figure 8, conformément à l'invention le système 10 de stockage d'hydrogène est partiellement installé à bord de l'aéronef 1. En effet, la pile à combustible 14 est alors externe à l'aéronef, par exemple installée à bord d'un véhicule de service d'un aéroport sur lequel est stationné l'aéronef. Une prise électrique Pe et un raccord de canalisation d'hydrogène Ph sont installés à bord de l'aéronef, par exemple fixés à son fuselage 2. La ligne électrique 24 s'étend entre la prise électrique Pe et l'unité de traitement 16. La canalisation d'hydrogène 21 s'étend entre le réservoir d'hydrogène 12 et le raccord de canalisation d'hydrogène Ph. Lorsque l'aéronef est stationné au sol, une canalisation amovible d'hydrogène 21a, reliée à la pile à combustible 14, est branchée au raccord de canalisation d'hydrogène Ph et un câble électrique amovible 24e, relié à une sortie électrique de la pile à combustible 14, est branché à la prise électrique Pe. Ce mode particulier de réalisation présente l'avantage de ne pas nécessiter le transport de la pile à combustible 14 lors des phases de vol de l'aéronef, ce qui permet de réduire la masse de l'aéronef et donc de réduire la consommation d'énergie nécessaire à sa propulsion.

## Revendications

1. Ensemble comprenant un aéronef (1) et un système de stockage d'hydrogène (10) qui comprend un réservoir d'hydrogène (12) et un système de contrôle de l'évaporation d'hydrogène dans le réservoir d'hydrogène, le système de contrôle comprenant :
- une canalisation (18) d'évacuation d'hydrogène reliée d'une part au réservoir d'hydrogène et d'autre part à une vanne commandable (22) ; et
- une unité de traitement (16) configurée pour commander la vanne en fonction de la pression dans le réservoir, de façon à garantir que la valeur de la pression à l'intérieur du réservoir d'hydrogène ne dépasse pas un premier seuil de pression prédéterminé ; ledit système de stockage d'hydrogène (10) comprenant
- une pile à combustible (14),
l'unité de traitement étant alimentée électriquement par la pile à combustible, **caractérisé en ce que** la pile à combustible (14) est reliée de façon permanente au réservoir d'hydrogène de façon à produire de l'électricité en permanence tant qu'il reste de l'hydrogène dans le réservoir,
et **en ce que** le réservoir d'hydrogène (12) est installé à bord de l'aéronef et la pile à combustible (14) du système de stockage d'hydrogène est installée dans une unité externe à l'aéronef, prévue pour être reliée à l'aéronef par une canalisation amovible d'hydrogène (21a) et par une liaison électrique amovible (24e).

2. Ensemble selon la revendication 1, **caractérisé en ce que** l'aéronef comprend un système de propulsion (3) alimenté en énergie par de l'hydrogène issu du système de stockage d'hydrogène (10).

3. Ensemble selon la revendication 2, **caractérisé en ce que** le système de propulsion comprend un moteur fonctionnant par combustion d'hydrogène issu du système de stockage d'hydrogène.

4. Ensemble selon la revendication 2, **caractérisé en ce que** le système de propulsion comprend un moteur électrique (32) alimenté électriquement par un ensemble de piles à combustible (34) alimentées en hydrogène par le système de stockage d'hydrogène (10).

5. Ensemble selon la revendication 4, **caractérisé en ce que** l'aéronef comporte un système électrique (29c) distinct de l'unité de traitement (16), ainsi qu'un circuit électrique (24c, 28c) configuré pour alimenter électriquement ce système électrique par la pile à combustible (14) du système de stockage d'hydrogène (10) lorsque l'aéronef est stationné au sol.

6. Ensemble selon la revendication 5, **caractérisé en ce que** ce système électrique (29c) correspond à un système de réchauffage d'au moins l'une des piles à combustible de l'ensemble de piles à combustible (34).

7. Ensemble selon l'une quelconque des revendications 4 à 6, **caractérisé en ce que** l'aéronef comporte un circuit électrique configuré pour permettre le raccordement d'un système électrique externe à l'aéronef lorsque l'aéronef est stationné au sol, et pour alimenter électriquement ce système électrique par la pile à combustible (14) du système de stockage d'hydrogène (10).

## Patentansprüche

1. Anordnung, umfassend ein Flugzeug (1) und ein Wasserstoffspeichersystem (10), das einen Wasserstofftank (12) und ein Kontrollsystem zur Kontrolle des Verdampfens von Wasserstoff in dem Wasserstofftank, das Kontrollsystem umfassend:
- eine Wasserstoffabführungsleitung (18), die zum einen mit dem Wasserstofftank und zum anderen mit einem steuerbaren Ventil (22) verbunden ist; und
- eine Verarbeitungseinheit (16), die dazu ausgestaltet ist, das Ventil in Abhängigkeit von dem Druck in dem Tank zu steuern, so dass garantiert wird, dass der Wert des Drucks im Inneren des Wasserstofftanks einen vorbestimmten ersten Druckschwellenwert nicht überschreitet; das Wasserstoffspeichersystem (10) umfassend
- eine Brennstoffzelle (14),
wobei die Verarbeitungseinheit von der Brennstoffzelle elektrisch versorgt wird, **dadurch gekennzeichnet, dass** die Brennstoffzelle (14) dauerhaft mit dem Wasserstofftank verbunden ist, so dass ständig Strom erzeugt wird, solange Wasserstoff in dem Tank verbleibt, und dadurch, dass der Wasserstofftank (12) an Bord des Flugzeugs installiert ist und die Brennstoffzelle (14) des Wasserstoffspeichersystems in einer flugzeugexternen Einheit installiert ist, die dazu vorgesehen ist, mit dem Flugzeug durch eine lösbare Wasserstoffleitung (21a) und durch eine lösbare elektrische Verbindung (24e) verbunden zu werden.

2. Anordnung nach Anspruch 1, **dadurch gekennzeichnet, dass** das Flugzeug ein Antriebssystem (3) umfasst, das durch aus dem Wasserstoffspeichersystem (10) hervorgegangenen Wasserstoff mit Energie versorgt wird.

3. Anordnung nach Anspruch 2, **dadurch gekennzeichnet, dass** das Antriebssystem einen Motor umfasst, der durch Verbrennung von aus dem Wasserstoffspeichersystem hervorgegangenen Wasserstoff betrieben wird.

4. Anordnung nach Anspruch 2, **dadurch gekennzeichnet, dass** das Antriebssystem einen Elektromotor (32) umfasst, der von einer Anordnung aus Brennstoffzellen (34), die von dem Wasserstoffspeichersystem (10) mit Wasserstoff versorgt werden, elektrisch versorgt wird.

5. Anordnung nach Anspruch 4, **dadurch gekennzeichnet, dass** das Flugzeug ein elektrisches System (29c) umfasst, das verschieden von der Verarbeitungseinheit (16) ist, sowie einen elektrischen Schaltkreis (24c, 28c), der dazu ausgestaltet ist, dieses elektrische System durch die Brennstoffzelle (14) des Wasserstoffspeichersystems (10) elektrisch zu versorgen, wenn das Flugzeug am Boden abgestellt ist.

6. Anordnung nach Anspruch 5, **dadurch gekennzeichnet, dass** dieses elektrische System (29c) einem System zum Erwärmen mindestens einer der Brennstoffzellen der Anordnung aus Brennstoffzellen (34) entspricht.

7. Anordnung nach einem der Ansprüche 4 bis 6, **dadurch gekennzeichnet, dass** das Flugzeug einen elektrischen Schaltkreis umfasst, der dazu ausgestaltet ist, das Anschließen eines flugzeugexternen elektrischen Systems zu ermöglichen, wenn das Flugzeug am Boden abgestellt ist, und dieses System durch die Brennstoffzelle (14) des Wasserstoffspeichersystems (10) elektrisch zu versorgen.

## Claims

1. Assembly comprising an aircraft (1) and a hydrogen storage system (10) that comprises a hydrogen tank (12) and a system for controlling the evaporation of hydrogen in the hydrogen tank, the control system comprising:
- a hydrogen discharge pipe (18) connected, at one end, to the hydrogen tank and, at the other end, to a controllable valve (22); and
- a processing unit (16) configured to control the valve on the basis of the pressure in the tank, so as to ensure that the value of the pressure inside the hydrogen tank does not exceed a first predetermined pressure threshold; said hydrogen storage system (10) comprising
- a fuel cell (14),
the processing unit being electrically powered by the fuel cell, **characterized in that** the fuel cell (14) is permanently connected to the hydrogen tank so as to permanently produce electricity as long as there is still hydrogen in the tank,
and **in that** the hydrogen tank (12) is installed on board the aircraft and the fuel cell (14) of the hydrogen storage system is installed in a unit that is external to the aircraft and intended to be connected to the aircraft by a removable hydrogen pipe (21a) and by a removable electrical connection (24e).

2. Assembly according to Claim 1, **characterized in that** the aircraft comprises a propulsion system (3) supplied with power by hydrogen from the hydrogen storage system (10).

3. Assembly according to Claim 2, **characterized in that** the propulsion system comprises an engine operating by the combustion of hydrogen from the hydrogen storage system.

4. Assembly according to Claim 2, **characterized in that** the propulsion system comprises an electric motor (32) electrically powered by a fuel cell assembly (34) supplied with hydrogen by the hydrogen storage system (10).

5. Assembly according to Claim 4, **characterized in that** the aircraft has an electrical system (29c) that is separate from the processing unit (16), and an electrical circuit (24c, 28c) configured to electrically power this electrical system via the fuel cell (14) of the hydrogen storage system (10) when the aircraft is parked on the ground.

6. Assembly according to Claim 5, **characterized in that** this electrical system (29c) corresponds to a system for heating at least one of the fuel cells of the fuel cell assembly (34).

7. Assembly as claimed in any one of Claims 4 to 6, **characterized in that** the aircraft has an electrical circuit configured to allow an external electrical system to be connected to the aircraft when the aircraft is parked on the ground, and to electrically power this electrical system via the fuel cell (14) of the hydrogen storage system (10).
